# EUROPÄISCHE PATENTSCHRIFT

(11) **EP 1 961 604 B1**
(45) Veröffentlichungstag und Bekanntmachung des Hinweises auf die Patenterteilung: **02.09.2009**
(21) Anmeldenummer: 08101379.9
(22) Anmeldetag: 07.02.2008
(51) Int. Cl.: F16D 3/04, B60G 21/05, A01C 19/04

(54) **Antriebsanordnung zum Antreiben eines Gerätes an einer Bodenbearbeitungsmaschine**
Drive assembly for driving a device on a soil cultivation machine
Dispositif d'entraînement destiné à entraîner un appareil sur une machine de traitement de sol

(30) Priorität: 24.02.2007 DE 102007009084
(43) Veröffentlichungstag der Anmeldung: 27.08.2008
(73) Patentinhaber: John Deere Brasil Ltda, 98920-010 Rio Grande do Sul (BR)
(72) Erfinder: Kroth, Rogerio, Horizontina RS (BR); Gelbhar, Ademar, Santa Rosa (BR)
(74) Vertreter: Löser, Iris

(56) Entgegenhaltungen:
- EP-A- 0 360 754
- EP-A- 1 380 459
- AU-A- 813 666
- FR-A- 1 107 022
- FR-A- 2 398 441
- US-A- 1 783 282
- US-A- 3 738 181
- US-A- 5 347 939

## Beschreibung

Die Erfindung betrifft eine Antriebsanordnung zum Antreiben eines Gerätes an einer Bodenbearbeitungsmaschine, mit wenigstens einem über den Boden angetriebenen Rad, einer Achsaufhängung, welche ein Gehäuse umfasst, an dem wenigstens ein mit dem Rad verbundener Achskörper schwenkbar aufgehängt ist, einem sich zwischen Rad und Gehäuse erstreckenden Antriebsstrang, und einer mit dem Antriebsstrang in Verbindung stehenden Antriebseinrichtung zum Antreiben des Gerätes.

Stetig wachsende Anforderungen an landwirtschaftlichen Maschinen bzw. Geräten hinsichtlich Produktivität und Leistungsvermögen führen dazu, dass landwirtschaftliche Maschinen bzw. Geräte, insbesondere Bodenbearbeitungsgeräte oder Bestellkombinationen immer größer werdende geometrische Ausmaße annehmen. In diesem Zusammenhang seien insbesondere Bodenbearbeitungsgeräte wie Kultiviermaschinen, insbesondere Pflüge, Eggen, Grubber, Fräsen etc. und Pflanzmaschinen, Sämaschinen bzw. Drillmaschinen genannt oder Bestellkombinationen, die mehrere der genannten Geräte vereinen. Die zunehmenden geometrischen Ausmaße dieser Maschinen bzw. Geräte führen wiederum zu einer Zunahme des Gewichtes. Das Gewicht der Maschine bzw. des Gerätes sollte auf eine möglichst große Bodenkontaktfläche verteilt werden, damit die durch die Reifen der Maschinen bzw. Geräte verursachte Bodenkompression verringert wird. Oftmals werden dazu Zweiradanordnungen gewählt, mit denen die Belastung eines Rades auf zwei Räder verteilt wird und damit eine größere Kontaktfläche geschaffen werden kann. Zweiradanordnungen verfügen in der Regel über eine entsprechende Achsaufhängung mit zwei Radachsen, wobei die Radachsen vertikal schwenkbar angeordnet sein können, damit sich die Räder bei Bodenunebenheiten unabhängig voneinander der Bodenkontur anpassen können.

Ein Großteil dieser landwirtschaftlichen Maschinen bzw. Geräte weisen Antriebsanordnungen auf, mit denen ein auf der Bodenbearbeitungsmaschine oder Bestellkombination angeordnetes Gerät, beispielsweise eine Rühreinrichtung oder eine Dosiereinrichtung für Dünger oder Saatgut, angetrieben wird. Derartige Antriebsanordnungen nutzen oftmals die Antriebskraft durch den Boden aus, derart, dass ein auf dem Boden geführtes Rad einer Radanordnung, sei es eine Zweiradanordnung oder eine Einradanordnung, durch den Boden angetrieben wird und über einen Antriebsstrang mit einer Antriebseinrichtung zum Antreiben des Gerätes verbunden ist.

US 378 181 offenbart eine solche Antriebsanordnung gemäß dem einleitenden Teil des Anpruchs 1.

Bei Radanordnungen, die über schwenkbare Achsen verfügen, müssen derartige Antriebsanordnungen Antriebsstränge aufweisen, die sich den Schwenkbewegungen der Radachsen bzw. der Achskörper anpassen bzw. eine Schwenkbewegung des Rades aufnehmen können. Dies wird in der Regel durch Kardanwellengelenke oder konische Verzahnungen bzw. Kegelradgetriebe gelöst, die sich den Schwenkbewegungen des Rades anpassen können. Derartige Lösungen gestalten sich konstruktiv aufwändig und kostenintensiv.

Die der Erfindung zugrunde liegende Aufgabe wird darin gesehen, eine Antriebsanordnung der eingangs genannten Art anzugeben durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist eine Antriebsanordnung der eingangs genannten Art einen Antriebsstrang auf, der einen auf dem Achskörper gelagerten und mit dem Rad drehfest verbundenen Antriebskörper, einen zum Gehäuse ortsfest angeordneten und drehbar gelagerten Abtriebskörper und einen zwischen dem Antriebskörper und dem Abtriebskörper rotierbar gelagerten Verbindungskörper umfasst, wobei der Verbindungskörper radial zu seiner Rotationsachse schwimmend zwischen dem Antriebskörper und dem Abtriebskörper gelagert ist. Dadurch, dass der Verbindungskörper radial schwimmend gelagert, also radial nicht ortsfest gelagert und dadurch beweglich angeordnet ist, können radial zur Rotationsachse des Antriebskörpers und des Abtriebskörpers entstehende Relativbewegungen zwischen Antriebskörper und Abtriebskörper, die durch eine Schwenkbewegung des Achskörpers bzw. des Rades gegenüber dem Gehäuse entstehen, aufgefangen werden. Gleichzeitig kann eine Drehbewegung durch den Verbindungskörper übertragen werden. Der Verbindungskörper ist dabei zwischen dem Antriebskörper und dem Abtriebskörper axial zur Rotationsachse fixiert angeordnet.

Der Verbindungskörper weist einen Hohlraum auf, durch welchen sich der Achskörper erstreckt. Die Schwenkbewegungen, die der Achskörper ausübt finden somit innerhalb des Hohlraumes des Verbindungskörpers statt, so dass der Verbindungskörper um den Achskörper herum angeordnet ist. Dadurch wird eine kompakte Bauweise erzielt.

Vorzugsweise ist der Verbindungskörper ringförmig ausgebildet, so dass auch dadurch möglichst kompakte Ausmaße erzielt werden.

Der Verbindungskörper kann jedoch auch andere geometrische Formen annehmen und beispielsweise als Platte oder Scheibe ausgebildet sein.

Zur Übertragung einer Rotationsbewegung vom Antriebskörper zum Abtriebskörper ist der Verbindungskörper auf seinen dem Antriebskörper und Abtriebskörper zugewandten Seiten mit Aussparungen und/oder Erhebungen ausgebildet, die mit gegenüberliegend an dem Antriebskörper und Abtriebskörper ausgebildeten Erhebungen und/oder Aussparungen derart in Eingriff stehen, dass eine Drehbewegung des Antriebskörpers auf den Verbindungskörper und von dort auf den Abtriebskörper übertragbar ist. Die Erhebungen und Aussparungen sind derart aufeinander abgestimmt, dass eine Erhebung von einer Aussparung aufgenommen werden kann. Bei Verdrehen der Körper erfolgt dann eine Übertragung der Drehbewegung durch gegenseitige Anlage der Seitenflächen der Erhebungen und/oder Aussparungen. Dabei können die Erhebungen an dem An- und dem Abtriebskörper und die Aussparungen nur an dem Verbindungskörper ausgebildet sein. Es können jedoch auch umgekehrte Anordnungen zweckmäßig sein, so dass die Erhebungen am Verbindungskörper und die Aussparungen am An- und am Abtriebskörper ausgebildet sind. Ferner ist es auch möglich sowohl Erhebungen und Aussparungen an einem der Körper auszubilden, die mit einer entsprechenden gegenüberliegenden Erhebung und/oder Aussparung in Eingriff stehen.

Die am Verbindungskörper ausgebildeten Erhebungen und/oder Aussparungen sind beidseitig des Verbindungskörpers um 180° versetzt angeordnet, wobei die Erhebungen und/oder Aussparungen auf der einen Seite des Verbindungskörpers um 90° versetzt zu den auf der anderen Seite des Verbindungskörpers angeordnet sind. Die mit diesen Erhebungen und/oder Aussparungen in Eingriff stehenden Erhebungen und/oder Aussparungen am Antriebskörper und am Abtriebskörper sind entsprechend angeordnet, so dass die Erhebungen und/oder Aussparungen am Antriebskörper und am Abtriebskörper ebenfalls um 180° versetzt zueinander angeordnet sind. Somit kann eine Schwenkbewegung des Achskörpers bzw. des Rades aufgefangen werden, da der Verbindungskörper zwei um 90° zueinander versetzte Freiheitsgrade aufweist, die radial zu seiner Rotationsachse ausgerichtet sind. Der Verbindungskörper kann dadurch Drehbewegungen vom Antriebskörper zum Abtriebskörper übertragen und gleichzeitig schwimmende Bewegungen in beliebige radiale Richtungen zu seiner Rotationsachse ausüben, wodurch Schwenkbewegungen des Rades aufgefangen werden.

Die Erhebungen und Aussparungen weisen Stirnflächen auf, die eine radial zur Rotationsachse ihres entsprechenden Körpers (Antriebskörper, Abtriebskörper und Verbindungskörper) ausgerichtete Vorzugsrichtung aufweisen, so dass sich der Verbindungskörper radial zu seiner Rotationsachse in begrenzten Bahnen schwimmend bewegen kann und ausreichend große Kraftübertragungsflächen an den Flanken der Erhebungen und Aussparungen zur Übertragung der Drehbewegungen geschaffen werden. Hierbei sei darauf hingewiesen, dass die obere Fläche einer Erhebung und die Bodenfläche einer Aussparung als Stirnflächen zu verstehen sind.

Die Erhebungen und Aussparungen können gekrümmt ausgeformte Stirnflächen aufweisen, wobei jeweils eine mit einer Erhebung in Eingriff stehende Aussparung ein konkav/konvex gekrümmtes Stirnflächenpaar bildet. Dies bedeutet, dass eine konkav gekrümmte Stirnfläche einer Erhebung mit einer Aussparung in Eingriff tritt, die eine entsprechend konvex gekrümmte Stirnfläche aufweist, und umgekehrt. Durch die gekrümmte Ausgestaltung der Stirnflächen kann der Verbindungskörper seine schwimmenden Bewegungen ohne Bewegungsspiel ausführen, so dass eine optimierte, verschleißarme Führung bzw. schwimmende Lagerung des Verbindungskörpers erzielt wird. Neben einer gekrümmten Formgebung der Stirnflächen ist jedoch auch eine sphärische Formgebung denkbar. Es sei ebenfalls darauf hingewiesen, dass die Stirnflächen auch ohne gekrümmte Oberfläche, also mit ebener Oberfläche ausgeführt sein können und eine Krümmung lediglich das Bewegungsspiel reduzieren, jedoch nicht die Funktionalität als solche beeinflussen würde. Daher sind glatt oder eben ausgebildete Stirnflächen, sei es einseitig oder beidseitig bzw. paarweise ausgebildet, funktional gleichwertig anzuwenden. Das Gleiche gilt für sphärisch oder gekrümmt ausgebildete Oberflächen der Stirnflächen.

Die Antriebseinrichtung der Antriebsanordnung umfasst einen am Gehäuse angeordneten Kettentrieb, wobei der Abtriebskörper des Antriebsstrangs mit dem Kettentrieb antriebsmäßig verbunden ist. Der Abtriebskörper kann dazu mit einem den Kettentrieb antreibenden Zahnrad oder Ritzel drehfest verbunden sein. Gleichermaßen kann das Zahnrad selbst einen Abtriebskörper des Antriebsstrangs darstellen und mit entsprechenden Erhebungen und/oder Aussparungen versehen sein, die mit dem Verbindungskörper in Eingriff stehen. Anstelle des Kettentriebs sind selbstverständlich auch andere Antriebsanordnungen verwendbar, beispielsweise Keilriemen- oder Zahnriemen-, oder Reibriementriebe, sowie Zahnradtriebe.

Vorzugsweise ist die erfindungsgemäße Antriebsanordnung an einer Zweiradanordnung einer landwirtschaftlichen Maschine angeordnet ist. Gleichermaßen ist diese Antriebsanordnung jedoch auch für Einradanordnungen geeignet, die über eine schwenkbare Aufhängung der Antriebsachse bzw. des Antriebskörpers verfügen.

In einem bevorzugten Ausführungsbeispiel ist eine landwirtschaftliche Maschine vorgesehen, insbesondere ein Bodenbearbeitungsgerät oder eine Bestellkombination, welche mit wenigstens einem anzutreibenden Gerät versehen ist, wobei das anzutreibende Gerät durch eine erfindungsgemäße Antriebsanordnung angetrieben wird.

Vorzugsweise ist das Gerät als Dosiervorrichtung für Dünger oder Saatgut, oder als Rühreinrichtung ausgebildet. Es kann sich jedoch auch um eine andere durch eine erfindungsgemäße Antriebsanordnung angetriebene Einrichtung handeln, die an der landwirtschaftlichen Maschine bzw. dem Bodenbearbeitungsgerät oder der Bestellkombination zum Einsatz kommt. Beispielsweise kann eine Sprüheinrichtung angetrieben werden oder eine Mischeinrichtung zur Mischung von Saatgut mit anderen Gütern oder Chemikalien. Ferner ist es durchaus denkbar, dass die erfindungsgemäße Antriebsanordnung zum Antrieb einer Kombination aus einer oder mehreren der genannten Einrichtungen eingesetzt wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Rückseitenansicht einer Zweiradanordnung mit einer erfindungsgemäßen Antriebsanordnung,
- Fig. 2: eine Rückseitendraufsicht der Antriebsanordnung aus Figur 1,
- Fig. 3: eine perspektivische Explosionsansicht der Antriebsanordnung aus Figur 1,
- Fig. 4: eine Querschnittvorderansicht der Achsaufhängung der Zweiradanordnung aus Figur 1 und
- Fig. 5: eine Seitenansicht eines von einem Schlepper gezogenen Bodenbearbeitungsgeräts mit einer durch eine erfindungsgemäße Antriebsanordnung angetriebene Dosiervorrichtung.

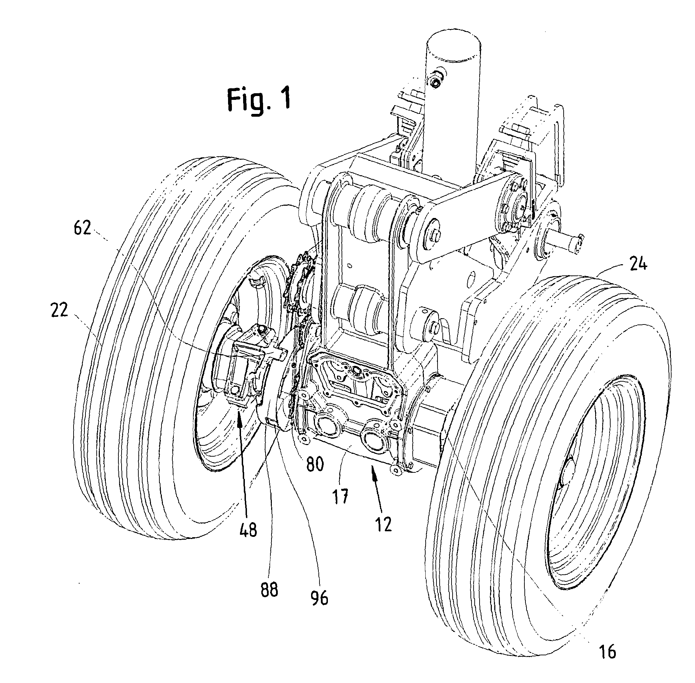

Figur 1 zeigt eine Zweiradanordnung 10 mit einer Achsaufhängung 12, an der sich beidseitig durch Öffnungen 14, 16 eines Gehäuses 17 erstreckende Achskörper 18, 20, mit daran gelagerten Rädern 22, 24, schwenkbar aufgehängt sind.

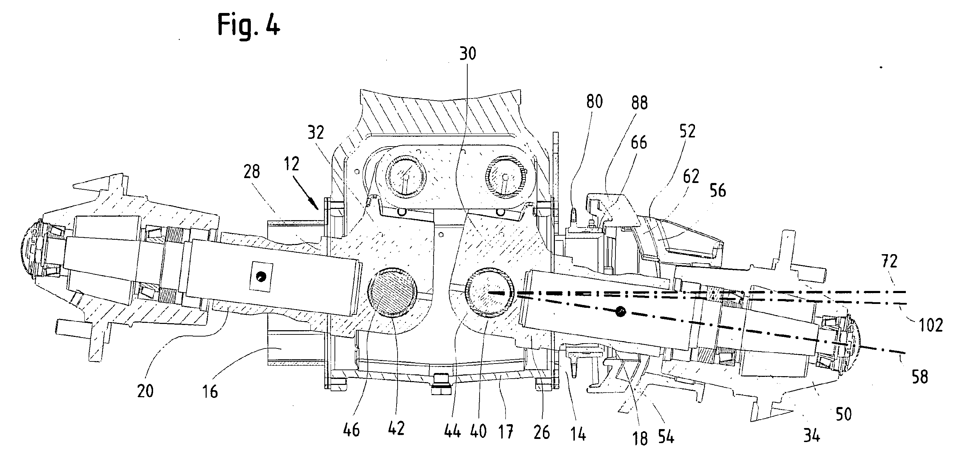

Die Achskörper 18, 20 sind knieförmig ausgebildet, wie am besten in Figur 4 zu sehen ist, und weisen einen ersten Schenkel 26, 28 und einen zweiten Schenkel 30, 32 auf, die in einem rechten Winkel zueinander angeordnet sind. Die ersten Schenkel 26, 28 sind jeweils mit einer Radachse 34, 36 verbunden, auf denen die Räder 22, 24 drehbar gelagert sind. Die Räder 22, 24 stützen die Achsaufhängung 12 gegenüber dem Boden ab, wobei sich die ersten Schenkel 26, 28 quer zur Rollrichtung der Räder 22, 24 erstrecken.

Die zweiten Schenkel 30, 32 erstrecken sich in zum Boden vertikaler Richtung und sind starr mit dem ersten Schenkel 26, 28 verbunden. Die Endbereiche der zweiten Schenkel 30, 32 sind über Verbindungsbolzen 34, 36 und über eine starre Verbindungsstrebe 38 gelenkig miteinander verbunden.

Zwischen den ersten und den zweiten Schenkeln 26, 28, 30, 32 ist jeweils eine Führungsbuchse 40, 42 ausgebildet, in der ein am Gehäuse 17 ortsfest gelagerter Schwenkbolzen 44, 46 aufgenommen ist.

Das Zusammenwirken der oben beschriebenen Komponenten ist in Figur 4 verdeutlicht. Die Achskörper 18, 20 werden mit ihren Führungsbuchsen 40, 42 auf den am Gehäuse 17 gelagerten Schwenkbolzen 44, 46 schwenkbar gelagert, wobei gegenüber dem Gehäuse 17 eine Schwenkbewegung der Achskörper 18, 20 um die die Schwenkachse bildende Längsachse der Schwenkbolzen 44, 46 ermöglicht wird. Die Achskörper 18, 20 stellen somit Schwenkkörper dar, die eine Auf- und Abbewegung der ersten Schenkel 26, 28 bzw. der Radachsen 34, 36 und damit der Räder 22, 24 in vertikaler Richtung zum Boden erlauben.

Die in einem rechten Winkel starr zu den ersten Schenkeln 26, 28 angeordneten zweiten Schenkel 30, 32 führen somit ebenfalls eine Schwenkbewegung aus, falls der jeweilige erste Schenkel 26, 28 ausgelenkt wird, beispielsweise durch eine von den Rädern 22, 24 überrollte Bodenwelle. Die beiden sich in vertikale Richtung erstreckenden zweiten Schenkel 30, 32 werden über die Verbindungsstrebe 38 und die in Lageröffnungen am Gehäuse 17 geführten Verbindungsbolzen 34, 36 miteinander gelenkig verbunden. Die Verbindungsstrebe 38 überträgt dabei eine hervorgerufene Schwenkbewegung des einen Achskörpers 18, 20 auf den anderen Achskörper 18, 20, so dass eine Schwenkbewegung des einen Achskörpers 18, 20 eine gleichgerichtete Schwenkbewegung des anderen Achskörpers 18, 20 auslöst. Die Verbindungsstrebe 38 und die Verbindungsbolzen 34, 36 stellen somit Verbindungsmittel dar, die die zweiten Schenkel 30, 32 gelenkig miteinander verbinden. Wird beispielsweise von dem bezogen auf Figur 1 rechten Rad 24, eine Bodenwelle überrollt, so vollzieht der rechte Achskörper 20 aus Figur 1 eine Aufwärtsschwenkbewegung und der linke Achskörper 18 aus Figur 1 eine Abwärtsschwenkbewegung. Dieser Zustand ist in Figur 4 exemplarisch dargestellt (wobei in Figur 1 eine Rückansicht und in Figur 4 eine Vorderansicht dargestellt ist).

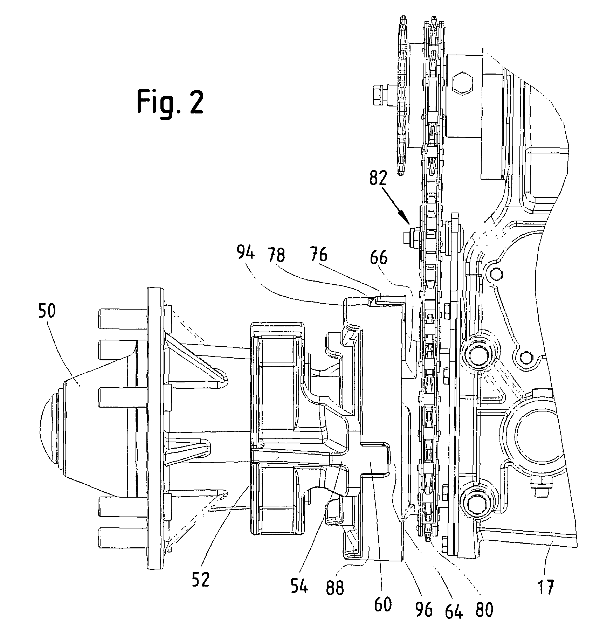

An dem in Figur 1 dargestellten linken Achskörper 18 (in Figur 4 auf der rechten Seite der Abbildung dargestellt) ist eine erfindungsgemäße Antriebsanordnung 48 vorgesehen, wie sie im Folgenden anhand der Figuren 2 bis 4 näher beschrieben wird.

Die Antriebsanordnung 48 umfasst einen mit dem Rad 22 bzw. mit einer entsprechenden Radnabe 50 drehfest verbundenen Antriebskörper 52. Der Antriebskörper 52 ist hohlförmig ausgebildet, so dass sich die entsprechende Radachse 34 durch diesen erstrecken kann. Der Antriebskörper 52 ist somit zusammen mit der Radnabe 50 auf dem entsprechenden Achskörper 18 gelagert und führt die gleichen Auf- und Abwärtsschwenkbewegung durch. Der Antriebskörper 52 weist zwei auf den Umfang des Antriebskörpers 52 im Abstand von 180° verteilt angeordnete flügelartige Überstände 54, 56 auf, die sich axial zur Rotationsachse 58 des Antriebskörpers 52 erstrecken. Auf den Überständen 54, 56 sind stegförmige Erhebungen 60, 62 ausgebildet, die sich in axiale Richtung zur Rotationsachse 58 des Antriebskörpers 52 erheben und Stirnflächen 64 aufweisen, die eine radial zur Rotationsachse 58 ausgerichtete Vorzugsrichtung besitzen.

Die Antriebsanordnung 48 umfasst ferner einen am Gehäuse 17 drehbar gelagerten Abtriebskörper 66. Der Abtriebskörper 66 ist hohlförmig ausgebildet, so dass sich die entsprechende Radachse 34 durch diesen erstrecken kann. Der Abtriebskörper 66 ist somit ortsfest zum Gehäuse 17 angeordnet. Der Hohlraum des Abtriebskörpers 66 ist so bemessen, dass bei einem maximalen Verschwenken des Achskörpers 18 der Achskörper 18 nicht gegen die Hohlraumwandung des Abtriebskörpers 66 stößt bzw. dass sich der Achskörper 18 ungehindert innerhalb des Achskörperhohlraums bewegen kann bzw. dass dieser ungehindert verschwenkt werden kann. Der Abtriebskörper 66 weist zwei auf den Umfang des Abtriebskörpers 66 im Abstand von 180° verteilt angeordnete flügelartige Überstände 68, 70 auf, die sich axial zur Rotationsachse 72 des Abtriebskörpers 66 erstrecken. Auf den Überständen 68, 70 sind stegförmige Erhebungen 74, 76 ausgebildet, die sich in axiale Richtung zur Rotationsachse 72 des Abtriebskörpers 66 erheben und Stirnflächen 78 aufweisen, die eine radial zur Rotationsachse 72 ausgerichtete Vorzugsrichtung besitzen.

Der Abtriebskörper 66 ist mit einem Radkranz, einer Verzahnung oder einem Ritzel 80 versehen bzw. verbunden, welches wiederum einen am Gehäuse 17 angeordneten Kettentrieb 82 antreibt. Der Kettentrieb 82 selbst bedarf keiner näheren Beschreibung und ist auf hinreichend bekannte Weise mit einem Antriebskörper, beispielsweise einer Antriebswelle 84, eines anzutreibenden Geräts bzw. einer anzutreibenden Einrichtung verbunden, beispielsweise ein Rührgerät für einen Saatguttank oder ein Dosiergerät 86 für die Saatgutausgabe.

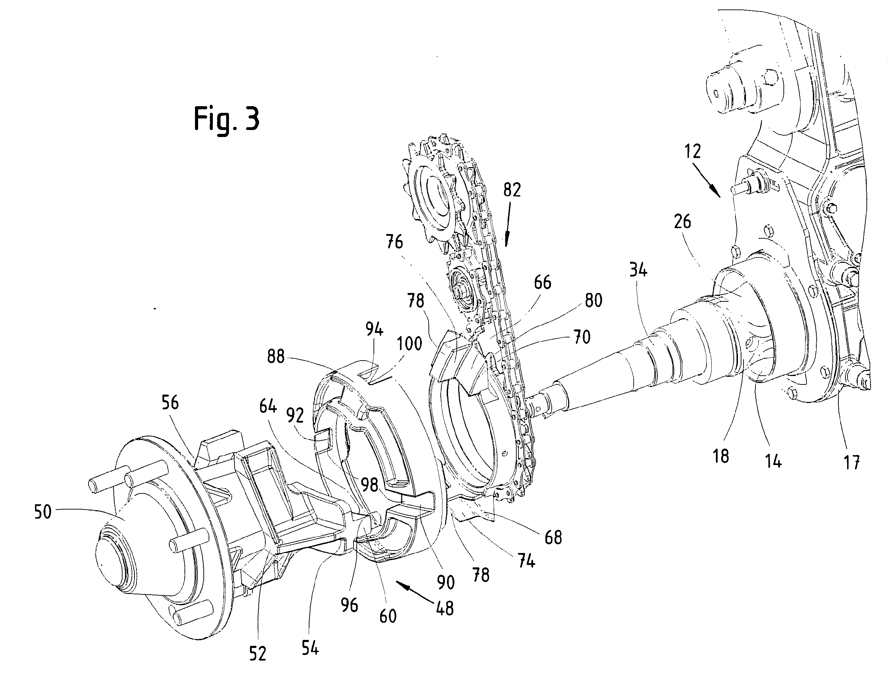

Wie besonders gut in Figur 3 zu erkennen ist, ist zwischen dem Antriebskörper 52 und dem Abtriebskörper 66 ein Verbindungskörper 88 angeordnet. Der Verbindungskörper 88 ist hohlförmig in Form eines Ringes ausgebildet, durch welchen sich der Achskörper 18 erstreckt. Der Hohlraum des Verbindungskörpers 88 ist so bemessen, dass bei einem maximalen Verschwenken des Achskörpers 18 der Achskörper 18 nicht gegen die Hohlraumwandung des Verbindungskörpers 88 stößt bzw. dass sich der Achskörper 18 ungehindert innerhalb des Verbindungskörperhohlraums bewegen kann bzw. dass dieser ungehindert verschwenkt werden kann. Der Verbindungskörper 88 weist zwei um 180° auf den Umfang verteilte antriebsseitige Aussparungen 90, 92 und zwei um 180° auf den Umfang verteilte abtriebsseitige Aussparungen 94, 96 auf. Die antriebsseitigen Aussparungen 90, 92 sind um 90° versetzt zu den abtriebsseitigen Aussparungen 94, 96 angeordnet. Gleichzeitig sind die antriebsseitigen stegförmigen Erhebungen 60, 62 zu den antriebsseitigen Aussparungen 90, 92 ausgerichtet, wohingegen die abtriebsseitigen stegförmigen Erhebungen 74, 76 zu den abtriebsseitigen Aussparungen 94, 96 ausgerichtet sind. Die Aussparungen 90, 92, 94, 96 weisen ebenfalls Stirnflächen 98, 100 auf, die eine radial zu einer Rotationsachse 102 des Verbindungskörpers 88 ausgerichtete Vorzugsrichtung besitzen.

Die Erhebungen 60, 62, 74, 76 sind derart an die Aussparungen 90,92,94,96 angepasst, dass sie formschlüssig in die Aussparungen 90,92,94,96 eingreifen. Durch das Eingreifen der Erhebungen 60, 62, 74, 76 in die Aussparungen 90,92,94,96 wird der Verbindungskörper 88 schwimmend zwischen dem Antriebskörper 52 und dem Abtriebskörper 66 gelagert. Durch die schwimmende Lagerung kann der Verbindungskörper 88 sich radial derart bewegen, dass er die unterschiedlichen axialen Ausrichtungen der Rotationsachsen 58, 72 des Antriebskörpers 52 und Abtriebskörpers 66, die entstehen, sobald der Achskörper 18 verschwenkt wird, ausgleichen kann, wobei gleichzeitig eine drehfeste Verbindung zwischen dem Antriebskörper 52 und dem Verbindungskörper 88 bzw. zwischen dem Verbindungskörper 88 und dem Abtriebskörper bestehen bleibt. Vorzugsweise sind die Stirnflächen 64, 78, 98, 100 gekrümmt ausgebildet, um eine möglichst hohe Formschlüssigkeit in allen Schwenkstellungen des Achskörpers 18 zu gewährleisten bzw. zu optimieren. Die Krümmungen der Stirnflächen 64, 78, 98, 100 sind so gewählt, dass die Stirnflächen 64 an den Erhebungen 60, 62 konkav, die Stirnflächen 98 an den Aussparungen 90, 92 entsprechend konvex, die Stirnflächen 100 an den Aussparungen 94, 96 konkav und die Stirnflächen 78 an den Erhebungen 74, 76 entsprechend konvex ausgebildet sind. Dadurch ergibt sich eine den Bewegungen des Verbindungskörpers 88 angepasste Formschlüssigkeit, so dass der Verbindungskörper 88 durch die an den Stirnflächen 64, 78, 98, 100 ausgebildeten Krümmungen stets optimal geführt wird, während die Erhebungen 60, 62, 74, 76 in den Aussparungen 90, 92, 94, 96 hin und her gleiten und über ihre Flanken eine Drehbewegung bzw. ein Antriebsmoment übertragen. Die beim Rotieren des Verbindungskörpers 88 von dem Verbindungskörper 88 angenommenen Stellungen umfassen dabei auch leichte Winkeländerungen bezüglich seiner Rotationsachse 102 gegenüber den Rotationsachsen 58, 72, was durch die gekrümmten Oberflächen der Stirnflächen 64, 78, 98, 100 derart unterstützt wird, dass auch in axialer Richtung zwischen den Stirnflächen 64, 78, 98, 100 ein optimaler Formschluss erzielt wird. Die Krümmungen der Stirnflächen 64, 78, 98, 100 in radialer Richtung weisen dabei einen Krümmungsradius auf, der dem Abstand der entsprechenden Stirnflächen 64, 78, 98, 100 zu der die Schwenkachse bildenden Längsachse des Schwenkbolzens 44 des Achskörpers 18 entspricht.

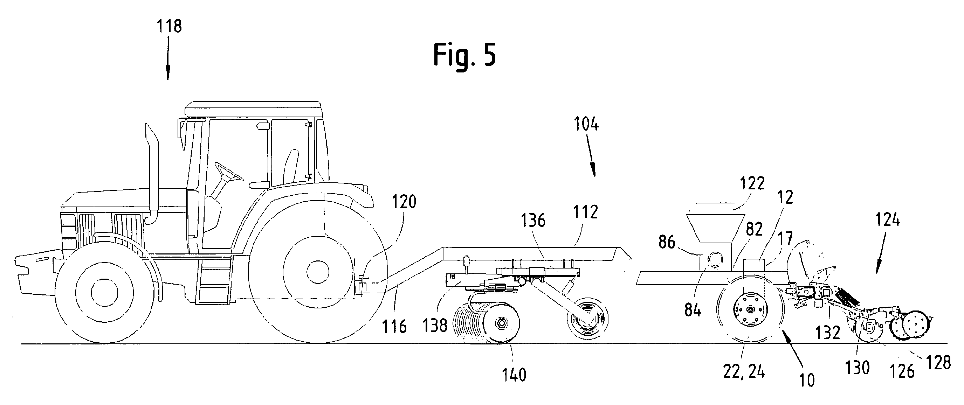

Figur 5 zeigt ein Anwendungsbeispiel einer erfindungsgemäßen Antriebsanordnung 48 an einer landwirtschaftlichen Bestellkombination 104. Die Bestellkombination 104 weist einen sich in der Vorwärtsrichtung (in der Zeichnung von links nach rechts) erstreckenden Rahmen 112 auf, der sich über die mit einer Achsaufhängung 12 verbundenen Räder 22, 24 auf dem Erdboden abstützt. An seinem vorderen Ende ist der Rahmen 112 über eine Deichsel 116 über eine lösbare Kupplung 120 mit einem Zugfahrzeug 118 in Form eines Ackerschleppers verbunden.

Der Rahmen 112 trägt vor den Rädern 22, 24 einen Saatgutbehälter 122 zur Aufnahme von Saatgut. Durch, das mit einer erfindungsgemäßen Antriebsanordnung 48 über den Kettentrieb 82 angetriebenes Dosiergerät 86 wird das Saatgut aus dem Saatgutbehälter 122 abgemessen und über Saatgutleitungen (nicht gezeigt) an der Rückseite des Rahmens 112 angeordneten Säeinrichtungen 124 zugeführt, die einen Furchenöffner 126 in Form einer Scheibe, Säschare 130, die das Saatgut in die durch den Furchenöffner 126 erzeugte Furche abgeben und Schließräder 128 zum anschließenden Schließen der Furche umfassen.

Es sind mehrere Säeinrichtungen 124 seitlich nebeneinander an einem sich am Rahmen 112 abstützenden, sich quer zur Vorwärtsrichtung erstreckenden Werkzeugträger 132 abgestützt. Vor dem Saatgutbehälter 122 ist unterhalb des Rahmens 112 ein Trägerrahmen 136 befestigt. Der Trägerrahmen 136 haltert einen Schwenkrahmen 138, an dem sich ein Bodenbearbeitungswerkzeug 140 in Form einer Scheibenegge abstützt. Anstelle der Scheibenegge kann auch ein beliebiges anderes Bodenbearbeitungswerkzeug 140 verwendet werden.

Auch wenn die Erfindung lediglich anhand eines Ausführungsbeispiels beschrieben wurde, erschließen sich für den Fachmann im Lichte der vorstehenden Beschreibung sowie der Zeichnung innerhalb des Schutzbereiches der Ansprüche viele verschiedenartige Alternativen, Modifikationen und Varianten, die unter die vorliegende Erfindung fallen.

## Patentansprüche

1. Antriebsanordnung (48) zum Antreiben eines Gerätes (86) an einer Bodenbearbeitungsmaschine (104), mit wenigstens einem über den Boden angetriebenen Rad (22, 24), einer Achsaufhängung (12), welche ein Gehäuse (17) umfasst, an dem wenigstens ein mit dem Rad (22, 24) verbundener Achskörper (18, 20) schwenkbar aufgehängt ist, einem sich zwischen Rad (22, 24) und Gehäuse (17) erstreckenden Antriebsstrang, und einer mit dem Antriebsstrang in Verbindung stehenden Antriebseinrichtung (82) zum Antreiben des Gerätes (86), **dadurch gekennzeichnet, dass** der Antriebsstrang einen auf dem Achskörper (18, 20) gelagerten und mit dem Rad (22, 24) drehfest verbundenen Antriebskörper (52), einen zum Gehäuse (17) ortsfest angeordneten und drehbar gelagerten Abtriebskörper (66) und einen zwischen dem Antriebskörper (52) und dem Abtriebskörper (66) rotierbar gelagerten Verbindungskörper (88) umfasst, wobei der Verbindungskörper (88) radial zu seiner Rotationsachse (102) schwimmend zwischen dem Antriebskörper (52) und dem Abtriebskörper (66) gelagert ist.

2. Antriebsanordnung (48) nach Anspruch 1, **dadurch gekennzeichnet, dass** der Verbindungskörper (88) einen Hohlraum aufweist durch welchen sich der Achskörper (18, 20) erstreckt.

3. Antriebsanordnung (48) nach Anspruch 1 oder 2, **dadurch gekennzeichnet, dass** der Verbindungskörper (88) ringförmig ausgebildet ist.

4. Antriebsanordnung (48) nach einem der vorhergehenden Ansprüche, **dadurch gekennzeichnet, dass** an dem Verbindungskörper (88) auf seinen dem Antriebskörper (52) und Abtriebskörper (66) zugewandten Seiten Aussparungen (90, 92, 94, 96) und/oder Erhebungen ausgebildet sind, die mit gegenüberliegend an dem Antriebskörper (52) und Abtriebskörper (66) ausgebildeten Erhebungen (60, 62, 74, 76) und/oder Aussparungen derart in Eingriff stehen, dass eine Drehbewegung des Antriebskörpers (52) auf den Verbindungskörper (88) und von dort auf den Abtriebskörper (66) übertragbar ist.

5. Antriebsanordnung (48) nach dem vorhergehende Anspruch, **dadurch gekennzeichnet, dass** die am Verbindungskörper (88) ausgebildeten Aussparungen (90, 92, 94, 96) und/oder Erhebungen beidseitig des Verbindungskörpers (88) um 180° versetzt angeordnet sind, wobei die Aussparungen (90, 92, 94, 96) und/oder Erhebungen auf der einen Seite des Verbindungskörpers (88) um 90° versetzt zu den auf der anderen Seite des Verbindungskörpers (88) angeordnet sind.

6. Antriebsanordnung (48) nach einem der vorhergehenden Ansprüche 4 oder 5, **dadurch gekennzeichnet, dass** die Aussparungen (90, 92, 94, 96) und Erhebungen (60, 62, 74, 76) Stirnflächen (64, 78, 98, 100) aufweisen, die eine radial zur Rotationsachse (58, 72, 102) ihres entsprechenden Körpers (52, 66, 88) ausgerichtete Vorzugsrichtung aufweisen.

7. Antriebsanordnung (48) nach einem der vorhergehenden Ansprüche 4, 5 oder 6, **dadurch gekennzeichnet, dass** die Aussparungen (90, 92, 94, 96) und Erhebungen (60, 62, 74, 76) gekrümmte Stirnflächen (64, 78, 98, 100) aufweisen, wobei jeweils eine mit einer Erhebung (60, 62, 74, 76) in Eingriff stehende Aussparung (90, 92, 94, 96) ein konkav/konvex gekrümmtes Stirnflächenpaar (64, 98, 78, 100) bildet.

8. Antriebsanordnung (48) nach einem der vorhergehenden Ansprüche, **dadurch gekennzeichnet, dass** die Antriebseinrichtung (82) einen am Gehäuse (17) angeordneten Kettentrieb umfasst und der Abtriebskörper (66) des Antriebsstrangs mit dem Kettentrieb antriebsmäßig verbunden ist.

9. Antriebsanordnung (48) nach einem der vorhergehenden Ansprüche, **dadurch gekennzeichnet, dass** die Antriebsanordnung (48) an einer Zweiradanordnung (10) einer landwirtschaftlichen Maschine (104) angeordnet ist.

10. Landwirtschaftliche Maschine (104), insbesondere Bodenbearbeitungsmaschine oder Bestellkombination, mit wenigstens einem anzutreibenden Gerät (86), **dadurch gekennzeichnet, dass** das Gerät (86) mit einer Antriebsanordnung (48) nach einem der vorhergehenden Ansprüche angetrieben wird.

11. Landwirtschaftliche Maschine (104) nach Anspruch 10, **dadurch gekennzeichnet, dass** das Gerät (86) als Dosiereinrichtung, als Rühreinrichtung, als Spritzeinrichtung, als Mischeinrichtung oder als eine Kombination aus einer oder mehreren der genannten Einrichtungen ausgebildet ist.

## Claims

1. Drive assembly (48) for driving a device (86) on a soil cultivation machine (104), with at least one wheel (22, 24) driven over the soil, an axle suspension (12) which comprises a housing (17) on which at least one axle element (18, 20) connected to the wheel (22, 24) is pivotably suspended, a drive train extending between the wheel (22, 24) and housing (17), and a drive device (82) which is connected to the drive train and is intended for driving the device (86), **characterized in that** the drive train comprises a drive element (52) which is mounted on the axle element (18, 20) and is connected in a rotationally fixed manner to the wheel (22, 24), a rotatably mounted driven element (66) arranged in a positionally fixed manner with respect to the housing (17), and a connecting element (88) mounted rotatably between the drive element (52) and the driven element (66), the connecting element (88) being mounted in a floating manner radially with respect to its axis of rotation (102) between the drive element (52) and the driven element (66).

2. Drive assembly (48) according to Claim 1, **characterized in that** the connecting element (88) has a hollow space through which the axle element (18, 20) extends.

3. Drive assembly (48) according to Claim 1 or 2, **characterized in that** the connecting element (88) is of annular design.

4. Drive assembly (48) according to one of the preceding claims, **characterized in that** recesses (90, 92, 94, 96) and/or elevations are formed on the sides of the connecting element (88) which face the drive element (52) and driven element (66), said recesses and/or elevations being in engagement with elevations (60, 62, 74, 76) and/or recesses formed lying opposite on the drive element (52) and driven element (66) such that a rotational movement of the drive element (52) can be transmitted to the connecting element (88) and from there to the driven element (66).

5. Drive assembly (48) according to the preceding claim, **characterized in that** the recesses (90, 92, 94, 96) and/or elevations formed on the connecting element (88) are arranged offset by 180° on both sides of the connecting element (88), the recesses (90, 92, 94, 96) and/or elevations on one side of the connecting element (88) being arranged offset by 90° with respect to those on the other side of the connecting element (88).

6. Drive assembly (48) according to either of the preceding claims 4 and 5, **characterized in that** the recesses (90, 92, 94, 96) and elevations (60, 62, 74, 76) have end surfaces (64, 78, 98, 100) which have a preferred direction oriented radially with respect to the axis of rotation (58, 72, 102) of their corresponding element (52, 66, 88).

7. Drive assembly (48) according to one of the preceding claims 4, 5 or 6, **characterized in that** the recesses (90, 92, 94, 96) and elevations (60, 62, 74, 76) have curved end surfaces (64, 78, 98, 100), with each recess (90, 92, 94, 96) in engagement with an elevation (60, 62, 74, 76) forming a concavely/convexly curved pair of end surfaces (64, 98, 78, 100).

8. Drive assembly (48) according to one of the preceding claims, **characterized in that** the drive device (82) comprises a chain drive arranged on the housing (17), and the driven element (66) of the drive train is connected in terms of drive to the chain drive.

9. Drive assembly (48) according to one of the preceding claims, **characterized in that** the drive assembly (48) is arranged on a two-wheel arrangement (10) of an agricultural machine (104).

10. Agricultural machine (104), in particular soil cultivation machine or combined cultivating and sowing machine, with at least one device (86) which is to be driven, **characterized in that** the device (86) is driven by a drive assembly (48) according to one of the preceding claims.

11. Agricultural machine (104) according to Claim 10, **characterized in that** the device (86) is designed as a metering device, as an agitating device, as a spraying device, as a mixing device or as a combination of one or more of the abovementioned devices.

## Revendications

1. Système d'entraînement (48) destiné à entraîner un appareil (86) sur une machine de traitement de sol (104), comprenant au moins une roue (22, 24) entraînée sur le sol, une suspension d'essieu (12) qui comprend un boîtier (17) sur lequel est suspendu, de manière pivotante, au moins un corps d'essieu (18, 20) connecté à la roue (22, 24), un ensemble de transmission s'étendant entre la roue (22, 24) et le boîtier (17), et un dispositif d'entraînement (82) en liaison avec l'ensemble de transmission, pour l'entraînement de l'appareil (86), **caractérisé en ce que** l'ensemble de transmission comprend un corps d'entraînement (52) monté sur le corps d'essieu (18, 20) et connecté de manière solidaire en rotation à la roue (22, 24), un corps de prise de force (66) disposé fixement par rapport au boîtier (17) et monté à rotation, et un corps de liaison (88) monté à rotation entre le corps d'entraînement (52) et le corps de prise de force (66), le corps de liaison (88) étant monté radialement par rapport à son axe de rotation (102) de manière flottante entre le corps d'entraînement (52) et le corps de prise de force (66).

2. Système d'entraînement (48) selon la revendication 1, **caractérisé en ce que** le corps de liaison (88) présente une cavité à travers laquelle s'étend le corps d'essieu (18, 20).

3. Système d'entraînement (48) selon la revendication 1 ou 2, **caractérisé en ce que** le corps de liaison (88) est réalisé sous forme annulaire.

4. Système d'entraînement (48) selon l'une quelconque des revendications précédentes, **caractérisé en ce que**, sur le corps de liaison (88), sur ses côtés tournés vers le corps d'entraînement (52) et le corps de prise de force (66), sont réalisés des évidements (90, 92, 94, 96) et/ou des rehaussements, qui sont en prise avec des rehaussements (60, 62, 74, 76) et/ou des évidements réalisés de manière opposée sur le corps d'entraînement (52) et le corps de prise de force (66), de telle sorte qu'un mouvement de rotation du corps d'entraînement (52) puisse être transmis au corps de liaison (88) et de là au corps de prise de force (66).

5. Système d'entraînement (48) selon la revendication précédente, **caractérisé en ce que** les évidements (90, 92, 94, 96) et/ou les rehaussements réalisés sur le corps de liaison (88) sont disposés de part et d'autre du corps de liaison (88) de manière décalée de 180°, les évidements (90, 92, 94, 96) et/ou les rehaussements d'un côté du corps de liaison (88) étant disposés de manière décalée de 90° par rapport à ceux disposés de l'autre côté du corps de liaison (88).

6. Système d'entraînement (48) selon l'une quelconque des revendications précédentes 4 ou 5, **caractérisé en ce que** les évidements (90, 92, 94, 96) et les rehaussements (60, 62, 74, 76) présentent des surfaces frontales (64, 78, 98, 100) qui présentent une direction préférentielle orientée radialement par rapport à l'axe de rotation (58, 72, 102) de son corps correspondant (52, 66, 88).

7. Système d'entraînement (48) selon l'une quelconque des revendications précédentes 4, 5 ou 6, **caractérisé en ce que** les évidements (90, 92, 94, 96) et les rehaussements (60, 62, 74, 76) présentent des surfaces frontales courbes (64, 78, 98, 100), un évidement (90, 92, 94, 96) en prise à chaque fois avec un rehaussement (60, 62, 74, 76) formant une paire de surfaces frontales de courbure concave/convexe (64, 98, 78, 100).

8. Système d'entraînement (48) selon l'une quelconque des revendications précédentes, **caractérisé en ce que** le dispositif d'entraînement (82) comprend un entraînement à chaîne disposé sur le boîtier (17), et le corps de prise de force (66) de l'ensemble de transmission est connecté par entraînement à l'entraînement à chaîne.

9. Système d'entraînement (48) selon l'une quelconque des revendications précédentes, **caractérisé en ce que** le système d'entraînement (48) est disposé sur un système à deux roues (10) d'une machine agricole (104).

10. Machine agricole (104), en particulier machine de traitement de sol ou combinaison sur commande, comprenant au moins un appareil à entraîner (86), **caractérisée en ce que** l'appareil (86) est entraîné avec un système d'entraînement (48) selon l'une quelconque des revendications précédentes.

11. Machine agricole (104) selon la revendication 10, **caractérisée en ce que** l'appareil (86) est réalisé sous forme de dispositif de dosage, de dispositif agitateur, de dispositif de pulvérisation, de dispositif de mélange ou d'une combinaison d'un ou de plusieurs des dispositifs mentionnés.
